**Europäisches Patentamt**

(19) **European Patent Office**

**Office européen des brevets**

(11) Veröffentlichungsnummer: **0 170 802**

**B1**

(12) **EUROPÄISCHE PATENTSCHRIFT**

(45) Veröffentlichungstag der Patentschrift:
23.11.88

(51) Int. Cl.⁴: **B 23 Q 11/08**

(21) Anmeldenummer: **85106054.1**

(22) Anmeldetag: **17.05.85**

(54) Führungsvorrichtung für zwei aneinander längsbeweglich gelagerte und angetriebene Maschinenteile.

(30) Priorität: **05.06.84 DE 3420936**

(43) Veröffentlichungstag der Anmeldung:
**12.02.86 Patentblatt 86/7**

(45) Bekanntmachung des Hinweises auf die Patenterteilung:
**23.11.88 Patentblatt 88/47**

(84) Benannte Vertragsstaaten:
**AT BE CH DE FR GB IT LI NL SE**

(56) Entgegenhaltungen:
**DE-A-2 201 492**
**DE-A-2 946 825**
**DE-C-743 259**
**DE-C-1 101 096**
**DE-C-1 291 178**
**FR-A-800 426**
**GB-A-2 112 350**

(73) Patentinhaber: **KUKA Schweissanlagen & Roboter GmbH, Blücherstrasse 144, D-8900 Augsburg (DE)**

(72) Erfinder: **Zimmer, Ernst, Michael- Steinherr Strasse 34, D-8904 Friedberg (DE)**

(74) Vertreter: **Ernicke, Hans- Dieter, Dipl.- Ing., Schwibbogenplatz 2b, D-8900 Augsburg (DE)**

EP 0 170 802 B1

## Beschreibung

Die Erfindung bezieht sich auf eine Führungsvorrichtung entsprechend dem Oberbegriff des Hauptanspruches.

Wenn die beiden Maschinenteile mit hoher Präzision relativ zueinander bewegt werden sollen, wie das bei Manipulatoren beispielsweise der Fall ist, besteht das Problem, daß die Führungsflächen von Verunreinigungen, insbesondere von Ablagerungen von Staub, Fett, Öl und dgl. geschützt werden müssen. Diese Ablagerungen beeinträchtigen nicht nur den freien Lauf und die Führung der Maschinenteile, sondern wirken sich auch nachteilig hinsichtlich der Genauigkeit der Bewegung aus, was insbesondere für weggesteuerte Stelltriebe, wie sie beispielsweise bei Manipulatoren zu finden sind, negative Folgen hat. Die tatsächliche Bewegung kommt dann der recherischen Vorgabe nicht mehr so nahe, wie sie soll.

Man hat sich in der Praxis bisher damit beholfen, die Führungen mit faltenbalgartigen Ummantelungen zu überdecken. Desgleichen ist es auch aus der DE-OS-2 946 825 bekannt, die Führungsbahn durch zwei mit dem bewegten Maschinenteil verbundene, auf- und abwickelbare Rollos zu überdecken. Die Rollos haben dabei den Nachteil daß sie die Führungsbahn nur von oben her und nicht von der Seite abdecken können und außerdem empfindlich und störungsanfällig sind. Die faltenbalgartige Ummantelung kann ebenfalls nicht befriedigen, weil sie mit erheblichem Platz- und Kostenaufwand und nicht unbeträchtlicher Störungsanfälligkeit verbunden ist.

Des weiteren ist es aus der DE-PS-1 101 096 bekannt, die Zahnstange einer Bohrpinole mit einem glatten Riemen abzudecken, die Führungsflächen der Bohrpinole aber ungeschützt zu lassen und Schmutzablagerungen durch Dichtlippen an der Führung des anderen Maschinenteils von der Bohrpinole abzustreifen. Eine solche Maßnahme reicht für hochgenaue Antriebe nicht aus, da solche Dichtungen nur für rotationssymmetrische Führungen geeignet sind und außerdem relativ schnell verschleißen und unbrauchbar werden.

Die Erfindung hat damit zur Aufgabe, die Führungen der beiden aneinander längsbeweglich gelagerten Maschinenteile auf andere und einfachere Weise vor Ablagerungen zu schützen.

Die Erfindung löst diese Aufgabe mit den Merkmalen im Kennzeichnungsteil des Hauptanspruches.

Auf diese Weise sind die Führungen der beiden Maschinenteile in einem nach außen hin vollständig geschlossenen Führungskanal angeordnet, wodurch keinerlei Schmutzpartikel, wie Staub, Fett, Öl oder dgl. mehr an die Führungen glangen können.

Um eine Relativbewegung der beiden Maschinenteile zu ermöglichen, weist der Führungskanal des einen Maschinenteils einen Schlitz auf, durch den die Führungselemente des anderen Maschinenteils ragen. Dieser Schlitz wird zum einen Teil vom Gehäuse des anderen Maschinenteils, dessen Führungselemente in den Kanal ragen, abgedeckt. Auf den übrigen Bereichen wird der Schlitz durch den aufgelegten Abdeckriemen verschlossen. Damit ist der Schlitz auch bei allen Bewegungsstellungen der Maschinenteile vollständig abgedeckt.

Besonders vorteilhaft ist es hierbei, daß die Schutzvorrichtung mit dem Antrieb der Maschinenteile kombiniert ist, indem als Abdeckriemen ein Zahnriemen vorgesehen ist. Der Zahnriemen ist ortsfest am einen Maschinenteil festgelegt und in einer Schleife über eine als Antriebsritzel ausgebildete Umlenkrolle im anderen Maschinenteil geführt. Der Zahnriemen kann über Spannmittel nachgespannt und in dichtender Anlage auf dem Führungsschlitz gehalten werden. Je nach Ausgestaltung befindet sich der Antrieb am beweglichen oder ortsfesten Maschinenteil.

Die Unterscheidung in ortsfestes und bewegliches Maschinenteil bezieht sich im Zusammenhang der Anmeldung nur auf die Relativbewegung zwischen beiden Teilen. Das "ortsfeste Maschinenteil" kann seinerseits an einem dritten Maschinenteil beweglich gelagert sein. Dies wäre z. B. bei einem Kreuzschlittenantrieb der Fall.

Die erfindungsgemäße Führungsvorrichtung ist unabhängig davon, ob das eine Maschinenteil gegenüber dem anderen oder umgekehrt bewegt wird. Desgleichen ist es für die Schutzvorrichtung gleichgültig, ob die starre Führungsbahn am bewegten oder am ortsfesten Maschinenteil angeordnet ist und die Führungselemente am entsprechenden Gegenstück. Um die bewegten Massen möglichst gering zu halten, empfiehlt es sich natürlich, die Führungsbahn am ortsfesten und im allgemeinen längeren Maschinenteil anzuordnen und die Führungselemente am bewegten, meist kleineren Maschinenteil vorzusehen.

In den dargestellten Ausführungsbeispielen der Erfindung weist das ortsfeste Maschinenteil den vom Riemen, insbesondere Zahnriemen, überdeckten, längsdurchlaufenden Führungskanal auf, in den die am anderen, bewegten Maschinenteil angeordneten Führungselemente hineinragen.

Im einen Ausführungsbeispiel sind als Führungselemente mindestens zwei hintereinander angeordnete Kugelumlaufpaare vorgesehen. Hierbei handelt es sich um handelsübliche Lager, die besonders für linear geführte Bauteile einsatzfähig sind. Die Kugeln dieser Lager werden über eine nicht unbeträchtliche Strecke geradlinig geführt, bis sie in eine kreisbogenformige Bahn einlaufen, die wiederum in eine geradlinige Rückführstrecke mündet. Bei solchen vorbekannten Kugelumlauflagerpaaren ist es üblich, daß der Grundkörper, in dem die Kugeln geführt sind, an dem anderen Teil befestigt, insbesondere angeschraubt wird. Das eine Teil weist dann eine Führungsrinne auf, in welche die Kugeln eingreifen. Hierbei empfiehlt es sich, den Grundkörper am bewegten Maschinenteil und die Führungsrinne am ortsfesten Maschinenteil anzuordnen.

Da bei der Erfindung das andere Maschinenteil längs des einen Maschinenteils über eine möglicherweise große Strecke geführt werden soll, ergibt sich die Konsequenz, daß die erfindungsgemäß vorgesehenen Führungselemente so angeordnet werden müssen, daß die Kippgefahr des beweglichen Maschinenteils beseitigt ist. Dies führt zur paarweisen Anordnung von mindestens zwei hintereinander vorgesehene Führungselementen, insbesondere Kugelumlauflagern.

Damit diese Kugelumlauflager möglichst spielfrei einstellbar sind, sieht die Erfindung im Rahmen einer Ausgestaltung vor, daß die zu einem Paar gehörenden Kugelumlauflager an einer zwischen ihnen befindlichen Schulter des anderen Maschinenteils abgestützt sind und daß der Führungskanal des einen Maschinenteils von zwei Führungsleisten gebildet ist, deren Abstand einstellbar ist. Man kann daher das andere Maschinenteil mit seinen Führungselementen in die Führung einsetzen, um daraufhin durch Verstellung einer der beiden Führungsleisten des einen Maschinenteils die Spielfreiheit der Führung zu erhalten.

Der Führungskanal kann entsprechend den Ausführungsbeispielen von den beiden Führungsleisten gebildet werden, deren Führungsrinnen dann gegeneinander nach innen weisen. In Variation dazu ist es auch möglich, die beiden Führungsleisten mit ihren Führungsrinnen nach außen weisen zu lassen.

In diesem Fall wird der Führungskanal von zwei mit seitlichem Abstand außerhalb der Führungsleisten aufragenden Stegen bildet, auf denen der Riemen aufliegt.

In einem anderen Ausführungsbeispiel der Erfindung ist die Führungsbahn als flaches, horizontales Schwert mit kugelstumpfförmig angeschrägten, seitlichen Laufflächen ausgebildet, mit denen seitlich angeordnete, entsprechend profilierte Führungsrollen im vertikal und horizontal formschlussigen Eingriff stehen. In diesem Fall wird der Führungskanal von seitlichen Abdeckblechen gebildet, die zwischen sich einen Schlitz freilassen, der vom Riemen abgedeckt wird. Der durch die Abdeckbleche gebildete Führungskanal kann aber auch bei anderen Arten von Führungen Verwendung finden.

Aus der erfindungsgemäßen Lösung, wonach ein Zahnriemen den Schlitz des Führungskanals abdeckt, ergibt sich ein Zusatzproblem, welches damit zusammenhängt, daß der Zahnriemen zufolge seiner Verzahnung im Abdeckbereich seitlich zugängliche Verbindungskanäle zur Führung aufweist, durch die zwar nicht sofort, jedoch nach und nach Staub, Fett oder dgl. in die Führung eindringen kann. Um diese Wirkung zu vermeiden, sind außenseitig am Führungskanal Anlageschultern oder auch verzahnte Leisten vorgesehen. Es ist aber auch möglich, den Zahnriemen aus einem breiten Trägergurt und einer demgegenüber schmäleren Zahnleiste aufzubauen. In diesem Fall greift die Zahnleiste in den Schlitz des Führungskanales, während der breitere Trägergurt außenseitig auf den Rändern des Führungskanales aufliegt und damit den Schlitz abdeckt.

Der Einsatz des erfindungsgemäßen Gegenstandes ist in vielfacher Weise möglich. Die Erfindung umfaßt daher auch den Gedanken der mehrfachen Anordnung der erfindungsgemäßen Führungsvorrichtung bei einem zwei- oder dreidimensionalen Bewegungen erzeugenden Manipulator.

Die Erfindung umfaßt auch mannigfache Varianten, wonach an einem Maschinenteil durchaus auch mehr als eine Schutzvorrichtung bzw. eine Schutzvorrichtung in Verbindung mit einem Zahnriementrieb eingesetzt werden können, indem beispielsweise zwei andere Maschinenteile unabhängig voneinander bewegbar geführt und angetrieben werden sollen.

Einzelheiten der Erfindung ergeben sich aus der Zeichnung. In ihr ist die Erfindung schematisch und beispielsweise dargestellt. Es zeigen:

Fig. 1: einen Längsschnitt durch zwei miteinander beweglich geführte Maschinenteile mit Zahnriementrieb und Kugelumlaufführung,

Fig. 2: einen Querschnitt entlang der Linie II-II durch die Anordnung gemäß Fig. 1,

Fig. 3: einen Querschnitt entlang der Linie III-III durch die Anordnung gemäß Fig. 1,

Fig. 4 u. 5: Querschnitte des Führungskanals gemäß Fig. 3 mit verschiedenen Varianten,

Fig. 6 u. 7: Querschnitte durch eine andere Ausführungsform der Kugelumlaufführung entsprechend den Fig. 2 und 3,

Fig. 8: eine schematische Perspektive für die Verbindung zahlreicher Maschinenteile zwecks Erzielung mehrdimensionaler Bewegungen, und

Fig. 9: einen Querschnitt durch eine Anordnung gemäß Fig. 1 mit einer Rollenführung.

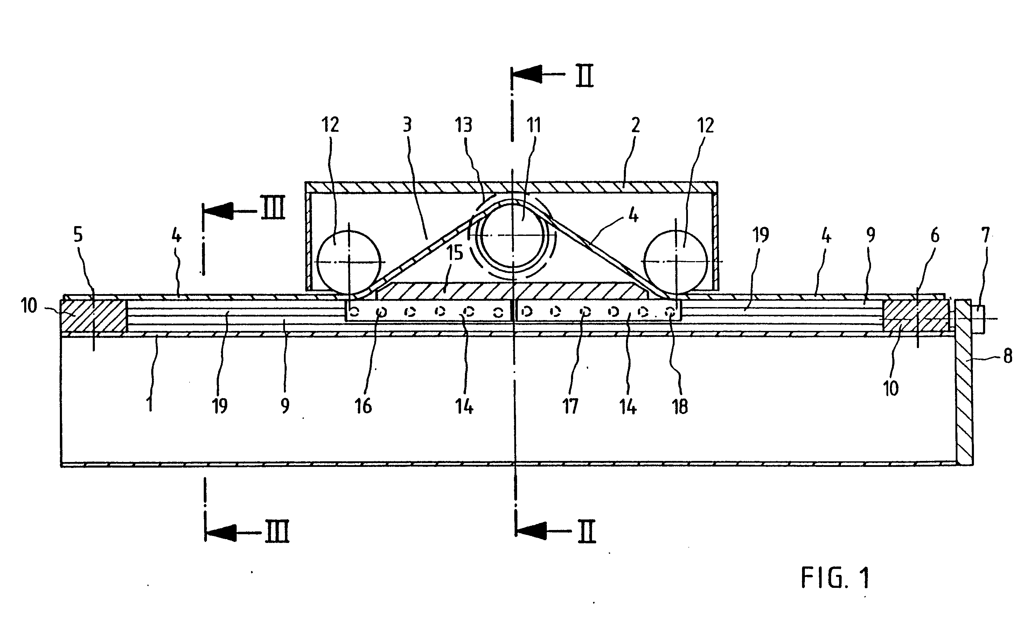

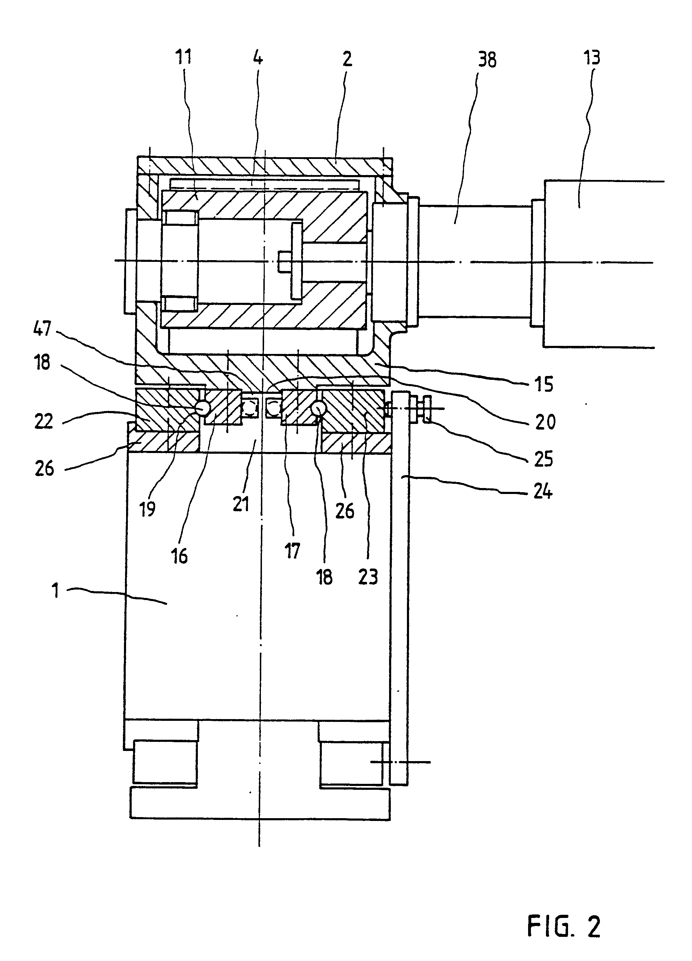

Beim Ausführungsbeispiel der Fig. 1 und 2 wird davon ausgegangen, daß das eine Maschinenteil 1 beispielsweise als Balken ortsfest ausgebildet ist, wohingegen das andere Maschinenteil 2 am einen Maschinenteil 1 längsbeweglich geführt und beispielsweise als Werkzeugträger ausgebildet ist. Selbstverständlich ist die Umkehr der Bewegung ohne weiteres möglich.

Um die Relativbewegungen der beiden Maschinenteile 1, 2 zueinander herbeizuführen, wird ein Zahnriemengetriebe 3 verwendet, welches einen Zahnriemen 4 aufweist, der ortsfest am einen Maschinenteil 1 angeordnet ist. Hierzu dienen die Befestigungen 5, 6 am Ende der in diesem Maschinenteil 1 vorgesehenen Führungsbahn 9. Da ein solcher Zahnriemen 4 eine definierte Spannung besitzen muß, ist beim Ausführungsbeispiel der Fig. 1 symbolisch im Bereiche der Befestigung 6 ein Spannmittel 7 vorgesehen, das mit Hilfe einer Platte 8 dazu führt, daß der Klotz 10, an dem der Zahnriemen 4 befestigt ist, längs der Führungsbahn 9 beweglich ist. Der Klotz 10 im Bereich der Befestigung 5 ist ortsfest.

Dieses Spannmittel 7 ist tatsächlich nur symbolisch dargestellt. An dessen Stelle können die verschiedensten Konstruktionen treten, die beispielsweise durch Drehbewegungen über Gewinde und dergleichen eine Längsverstellung des Klotzes 10 im Bereiche der Befestigung 6 herbeiführen.

Der Zahnriemen 4 wird über ein Antriebsritzel 11 geführt, welches in dem anderen Maschinenteil 2 gelagert und mit einem Antriebsmotor 13 verbunden ist. Die beiden Spannrollen 12 dienen dazu, die vom Antriebsritzel 11 bedingte Ausbauchung des Zahnriemens 4 in die zum einen Maschinenteil 1 parallele Ebene zu führen.

In dem Dreieck, welches durch die Führung des Zahnriemens über das Antriebsritzel 11 und unter die Spannrollen 12 gebildet wird, sind Führungselemente 14 am anderen Maschinenteil 2 befestigt, die in die Führungsbahn 9 des einen Maschinenteils 1 eingreifen. Zur Befestigung dient beispielsweise der Boden 15, der fester Bestandteil des anderen Maschinenteils 2 ist, sich aber oberhalb des oberen Randes des einen Maschinenteils 1 bewegt. Um die Kippbewegung des anderen Maschinenteils 2 zu vermeiden, sieht die Erfindung die paarweise Anordnung mehrerer Führungselemente 14 hintereinander vor.

In dem auch später beschriebenen Ausführungsbeispiel sieht die Erfindung die Anwendung sogenannter Kugelumlauflager 16, 17 vor. Bei diesen Lagern 16, 17 werden die Kugeln 18 über eine nicht unbeträchtliche Strecke geradlinig geführt und kehren über kreisförmige Umlenkbahnen und eine dazwischen befindliche Rückführbahn wieder in die ursprüngliche Ausgangslage zurück. Deswegen sind solche Kugelumlauflager 16, 17 besonders dafür geeignet, lineare Bewegungen mit einwandfreier Führung zuzulassen. Die Hintereinanderanordnung solcher Kugelumlauflager 16, 17 führt zur besonderen Stabilität der Führung.

Im Beispiel der Fig. 1 ist ferner dargestellt, daß die Kugeln 18 der Führungselemente 14 bzw. Kugelumlauflager 16, 17 in Führungsrinnen 19 eingreifen, die Bestandteil des einen Maschinenteils 1 bzw. seiner Führungsbahn 9 sind.

Bei dem Querschnitt gemäß Fig. 2 ist ersichtlich, daß der Antriebsmotor 13 seitlich an das andere Maschinenteil 2 angeflanscht ist und unmittelbar oder durch Zwischenschaltung eines Getriebes 38 das Antriebsritzel 11 antreibt. Das andere Maschinenteil 2 ist gehäuseförmig ausgebildet. Der Boden 15 dieses Gehäuses 2 weist eine Schulter 20 auf, gegen welche die beiden Kugelumlauflager 16, 17 angestellt werden. Deren Kugeln 18 greifen in die Führungsrinnen 19 ein, die sich an Führungsleisten 22, 23 befinden, welche Bestandteil des einen Maschinenteils 1 sind. Die eine Führungsleiste 22 stützt sich an einer Aufnahmeleiste 26 ortsfest ab. Die andere Führungsleiste 23 ist mit Hilfe des Spannmittels 25 querverstellbar. Sie wirkt über die Kugeln 18 auf das zugeordnete Kugelumlauflager 17 ein und verspannt diese Lager 16, 17 über die Schulter 20 und die Führungsleiste 22 gegen die Aufnahmeleiste 26. Auf diese Weise wird Spielfreiheit erzeugt. Das Spannmittel 25, welches in beliebiger Weise ausgeführt sein kann, stützt sich an einer Platte 24 ab, die mit dem einen Maschinenteil 1 fest verbunden ist.

Zwischen den beiden Führungsleisten 22, 23 wird ein bis auf einen Längsschlitz 47 vollständig geschlossenen Führungskanal 21 gebildet, in den die Kugelumlauflager 16, 17 hineinragen, welche ihrerseits mit dem anderen Maschinenteil 2 ortsfest verbunden sind.

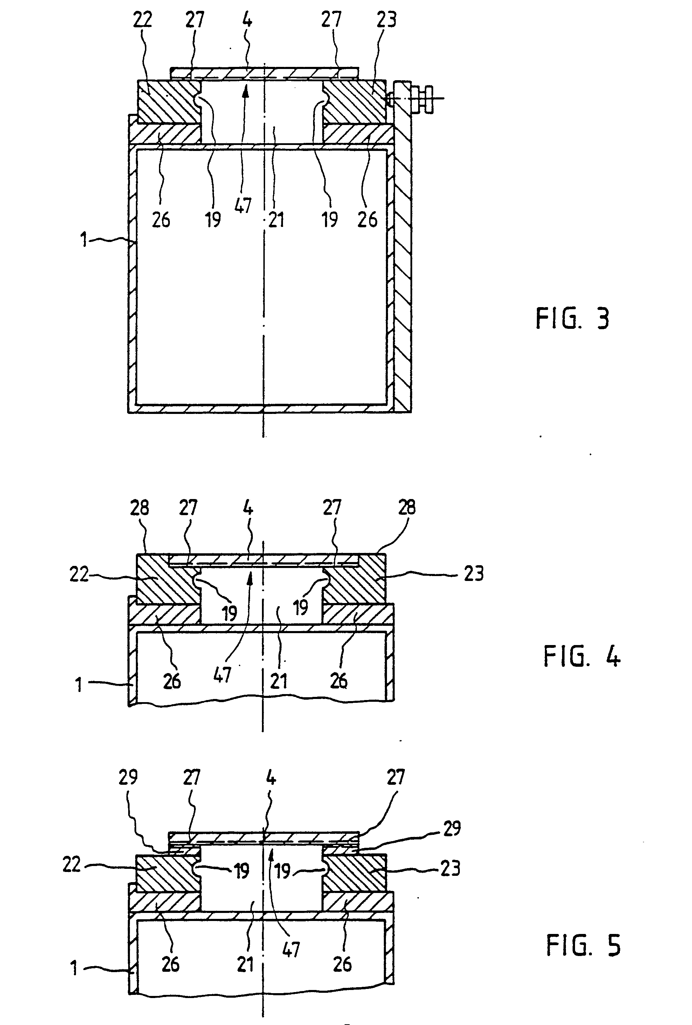

Im Beispiel der Fig. 3 wird dargestellt, wie der Zahnriemen 4 den Führungskanal 21 bzw. den Schlitz 47 überdeckt, und zwar in einer Stellung, distanziert von der Lage des anderen Maschinenteils 2. Die beiden Führungsleisten 22, 23 werden mindestens teilweise vom Zahnriemen 4 überdeckt. Mit 27 sind die Anlageflächen des Zahnriemens 4 an den Führungsleisten 22, 23 bezeichnet.

Bei dieser Lage gemäß Fig. 3 ist unverkennbar, daß ein freier Zugang der Außenluft mit ihren Bestandteilen zum Führungskanal 21 durch die Zahnlücken im Zahnriemen 4 von der Seite her möglich ist.

Die Fig. 4 und 5 zeigen Vorschläge, wie diese Möglichkeit beispielsweise unterbunden werden kann.

Beim Ausführungsbeispiel der Fig. 4 wird die Anlagefläche 27 der einzelnen Führungsleiste 22, 23 seitlich von erhabenen Flächen 28 begrenzt, wodurch die Zahnlücken im Zahnriemen 4 stirnseitig abgedeckt sind. Im Ausführungsbeispiel der Fig. 5 ist vorgesehen, daß in den Führungsleisten 22, 23 im Bereiche der Anlageflächen 27 verzahnte Leisten 29, die auch Riemen sein können, vorgesehen sind. Deren Verzahnung paßt zur Verzahnung des Zahnriemens 4. Auf diese Weise werden die Zahnlücken im Zahnriemen 4 geschlossen, ohne daß besondere Maßnahmen an den Führungsleisten 22, 23 zum Verschließen der Zahnlücken getroffen werden müssen.

Beim Beispiel der Fig. 2 ist dargestellt, daß die Kugelumlauflager 16, 17 am bewegbaren Maschinenteil 2 befestigt sind, was gemäß Fig. 3 dazu führt, daß der Zahnriemen 4 nur mit seinen Randbereichen abgestützt ist.

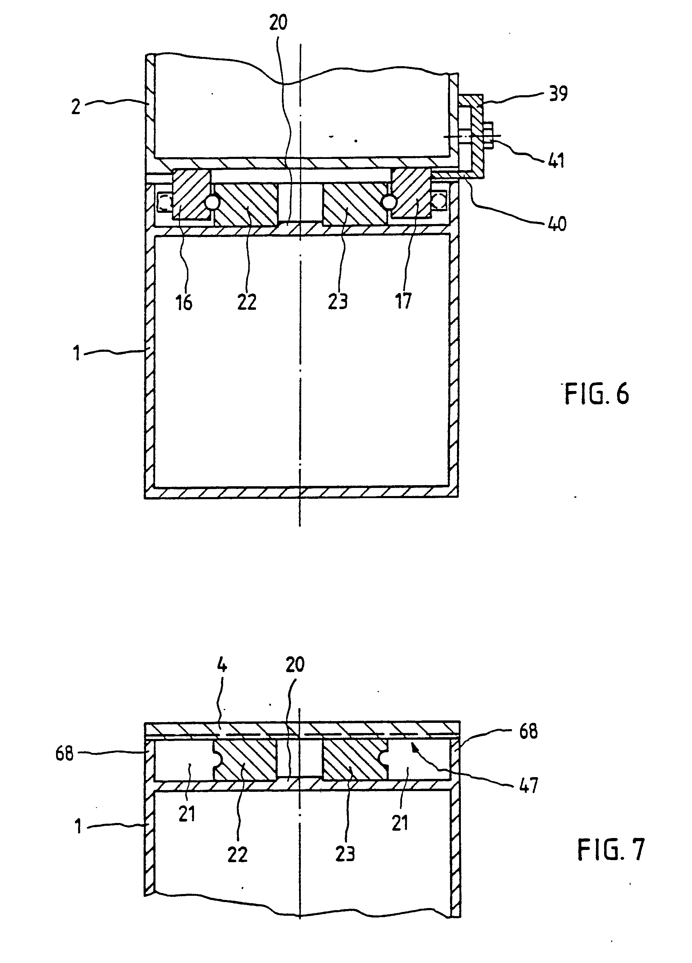

Die Fig. 6 und 7 zeigen die Umkehr der Anordnung von Fig. 2. Vergleicht man Fig. 7 mit Fig. 3, stellt man fest, daß bei der Anordnung nach Fig. 6 und 7 der Zahnriemen 4 nicht nur im Randbereich an vertikalen Stegen 68, sondern auch mittig durch Auflage an den Führungsleisten 22, 23 abgestützt ist. Der Führungskanal 21 wird damit durch die beiden vertikalen Stege 68 und den Quersteg des Maschinenteils 1 gebildet.

Die spielfreie Einstellung der Führung wird durch Spannpratzen 39 herbeigeführt, die mit ihrem Schenkel 40 das Kugelumlauflager 17 und die Führungsleiste 23 gegen die Schulter 20 des Maschinenteils 1 drücken, während die Schraube 41 das Maschinenteil 2 an sich heranzieht und somit das Kugelumlauflager 16 und die Führungsleiste 22 gegen die Schulter 20 verspannt.

Es liegt auf der Hand, daß der in den Fig. 1 bis 7 dargestellte Gegenstand nur ein Grundelement sein kann, welches sich in beliebiger Weise mit anderen, gleichartigen Grundelementen verbinden läßt, um somit zu einer mehrdimensionalen Bewegung aneinandergeführter Teile zu kommen.

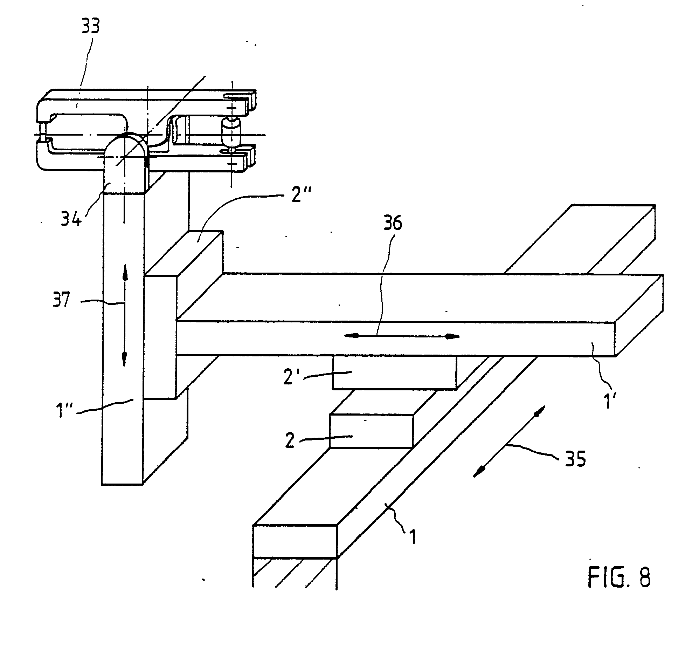

In Fig. 8 ist als eine von vielen Möglichkeiten eine solche Kombination dargestellt. Danach ist das eine Maschinenteil 1 in irgendeiner Weise ortsfest angeordnet, bzw. mit dem Boden verbunden. Mit diesem Maschinenteil 1 ist das andere Maschinenteil 2 beweglich verbunden, welches längs des Pfeiles 35 verschieblich am Maschinenteil 1 geführt ist.

Dieses andere Maschinenteil 2 trägt nun ein Maschinenteil 2', an dem ein Maschinenteil 1' entlang des Pfeiles 36 beweglich geführt ist. diese Anordnung 1, 1', 2, 2' bildet die Voraussetzung zur zweidimensionalen Bewegung eines Werkzeuges 33, das beispielsweise am Ende des Maschinenteils 1' angeordnet ist.

Die Fig. 8 zeigt aber darüber hinaus, am Ende des Maschinenteils 1' ein Maschinenteil 2'' vorzusehen, an welchem sich in Richtung des Pfeiles 37 das Maschinenteil 1'' führt. Wie bereits früher gesagt, ist es völlig gleichgültig, an welcher Stelle der Antriebsmotor 13 für das einzelne Maschinenteil vorgesehen ist. Im Beispiel der Fig. 8 ist überdies dargestellt, daß am oberen Ende des Maschinenteils 1'' sich eine Halterung 34 befindet, in der das Werkzeug 33 in irgendeiner Weise beweglich geführt ist. Je nachdem, welche Arbeit das Werkzeug 33 zu leisten hat, wird die Ausbildung der Halterung 34 gestaltet werden müssen, beispielsweise zur Anordnung einer Schweißzange, eines sonstigen Schweißwerkzeuges, einer Preßvorrichtung, einer spanabhebend arbeitenden Vorrichtung und dergleichen.

In allen Fällen ist aber sichergestellt, daß die Führungen 9, 14 der einzelnen Elemente durch den Zahnriemen 4 gegen die Ablagerung von Staub und dergleichen geschützt sind.

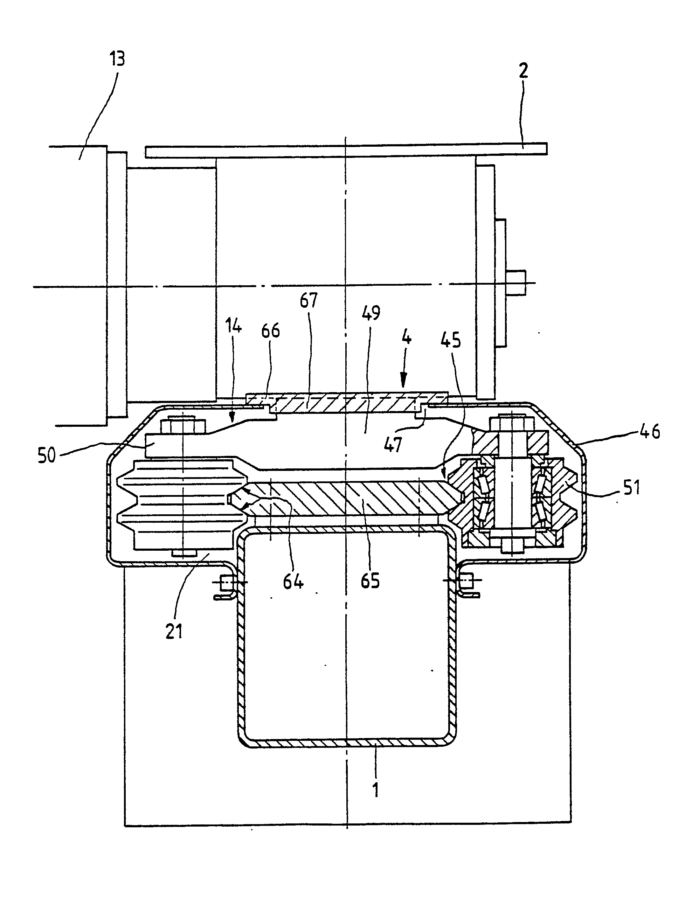

Fig. 9 zeigt eine weitere Variation der Schutzvorrichtung, wie sie auch in Verbindung mit den Ausführungsbeispielen der Fig. 1 bis 7 Verwendung finden kann. Die Führungsbahn 45 wird hier von einem flachen, horizontalen Schwert 65 gebildet, das auf dem ortsfesten Maschinenteil 1 angeschraubt ist. Das Schwert 65 weist an seinen beiden Längsseiten kegelstumpfförmig profilierte Laufflächen 64 auf. Bei Verwendung eines Zahnstangentriebes anstelle eines Zahnriementriebes kann die Zahnstange auf dem Schwert 65 befestigt sein.

Die Führungsbahn 45 ist in einem, bis auf einen oberen Längsschlitz 47 vollständig geschlossenen Führungskanal 21 angeordnet, der durch seitliche, am Maschinenteil 1 befestigte Abdeckbleche 46 gebildet wird.

Das bewegte Maschinenteil 2 weist ein Schlittengestell 49 auf, das im Bereich unterhalb der Riemenschleife (vgl. Fig. 1) durch den Schlitz 47 in den Führungskanal 21 eingreift und sich dort in Längsrichtung unterhalb des Schlitzes 47 fortsetzt. Auf diese Weise kann eine große Stützlänge für die kippsichere Führung des Maschinenteils 2 erreicht werden. Das Schlittengestell 49 weist an seinen beiden Enden oder auch an Stellen dazwischen seitliche Ansätze 50 auf, an denen Führungsrollen 51 drehbar befestigt sind, die mit den Laufflächen 64 in Eingriff stehen. Die Führungsrollen 51 weisen ein formschlüssiges Gegenprofil zu den Laufflächen 64 auf und bestehen jeweils aus zwei drehbar auf einem Führungszapfen gelagerten und gegeneinander verspannten Einzelrollen mit kegelstumpfförmigem Querschnitt. Damit lassen sich die Führungsrollen 51 spielfrei auf die Laufflächen 64 einstellen. Durch die Profilierung der Laufflächen 64 und der Führungsrollen 51 wird bei minimaler Baugröße eine einstellbare und nach allen Seiten formschlüssige Führung erzielt.

Wie aus Fig. 9 ersichtlich, umgreifen die Abdeckbleche 46 die Führungsrollen 51, die Ansätze 50 und das Schlittengestell 49. Ein solcher, durch entsprechend geformte Abdeckbleche 46 gebildeter Führungskanal 21 kann auch mit anderen Arten von Führungen kombiniert werden. Die um die vertikale Achse drehenden, profilierten Führungsrollen 51 können beispielsweise auch durch jeweils drei Einzelrollen ersetzt werden, die ein im Querschnitt rechteckiges Schwert 65 jeweils von drei Seiten umgreifen. Desgleichen ist auch eine Übertragung auf die Ausführungsbeispiele der Fig. 1 bis 7 möglich.

Fig. 9 zeigt auch eine andere Art der Riemengestaltung. Der Zahnriemen 4 besteht aus einem breiten Trägergurt 66 und einer demgegenüber schmäleren Zahnleiste 67. Die Breite der Zahnleiste 67 ist dabei so gewählt, daß sie mit ausreichend Spiel im Schlitz 47 geführt ist. Demgegenüber ist die Breite des Trägergurtes 66 so groß gewählt, daß der Zahnriemen 4 verformungsfrei auf den Rändern des Führungskanals 21 aufliegt.

Entsprechend den Ausführungsbeispielen der Fig. 3 bis 5 können auf den Abdeckblechen 46 zu beiden Seiten des Schlitzes 47 auch Schultern 28 oder Zahnleisten 29 angebracht sein.

Stückliste

1 das eine maschinenteil (Balken)
2 das andere Maschinenteile

(Werkzeugträger)
3 Zahnriemengetriebe
4 Zahnriemen
5 Befestigung
6 Befestigung
7 Spannmittel
8 Platte
9 Führungsbahn
10 Klotz
11 Antriebsritzel, Umlenkrolle
12 Spannrolle
13 Antriebsmotor
14 Führungselement
15 Boden
16 Kugelumlauflager
17 Kugelumlauflager
18 Kugel
19 Führungsrinne
20 Schulter
21 Führungskanal
22 Führungsleiste
23 Führungsleiste
24 Platte
25 Spannmittel
26 Aufnahmeleiste
27 Anlagefläche
28 erhabene Fläche, Anlageschulter
29 verzahnte Leiste
30 Rad
31 Rad
32 Riemenende
33 Werkzeug
34 Halterung
35 Pfeil
36 Pfeil
37 Pfeil
38 Getriebe
39 Spannpratze
40 Schenkel
41 Schraube
42 -
43 -
44 -
45 Führungsbahn
46 Abdeckblech
47 Schlitz
48 -
49 Schlittengestell
50 Ansatz
51 Führungsrolle
52 - 63 -
64 Lauffläche
65 Schwert
66 Trägergurt
67 Zahnleiste, Schulter
68 Steg

**Patentansprüche**

1. Führungsvorrichtung für zwei aneinander längsbeweglich gelagerter und angetriebener Maschinenteil (1, 2) wobei die Führungsvorrichtung mit einer Schutzvorrichtung versehen ist Maschinenteile (1, 2), dadurch gekennzeichnet, daß eine Führungsbahn (9, 45) am einen Maschinenteil (1) in einem bis auf einen Längsschlitz (47) völlig geschlossenen Führungskanal (21) angeordnet ist, wobei durch den Schlitz (47) die Führungselemente (14) des anderen Maschinenteils (2) ragen und der Schlitz (47) im nicht vom anderen Maschinenteil (2) abgedeckten Bereich von einem Zahnriemen (4) abgedeckt wird, der im anderen Maschinenteil (2) zwischen zwei Spannrollen (12) in einer Schleife über eine als Antriebsritzel ausgebildete Umlenkrolle (11) geführt ist, die mit Abstand oberhalb der Spannrollen (12) und der Führungsbahn (9, 45) angeordnet ist.

2. Führungsvorrichtung nach Anspruch 1, dadurch gekennzeichnet, daß als Führungselemente (14) mindestens zwei hintereinander angeordnete Kugelumlauflagerpaare (16, 17) vorgesehen sind, die am anderen Maschinenteil (2) im Bereich unter der Riemenschleife angeordnet sind.

3. Führungsvorrichtung nach Anspruch 2, dadurch gekennzeichnet, daß die zu einem Paar gehörenden Kugelumlauflager (16 bzw. 17) an einer zwischen ihnen befindlichen Schulter (20) des anderen Maschinenteiles (2) abgestützt sind und daß der Führungskanal (21) des einen Maschinenteils (1) von zwei Führungsleisten (22, 23) gebildet ist, deren Abstand einstellbar ist.

4. Führungsvorrichtung nach Anspruch 1, dadurch gekennzeichnet, daß die Führungsbahn (45) als flaches, horizontales Schwert (65) mit kegelstumpfförmig angeschrägten, seitlichen Laufflächen (64) ausgebildet ist, mit denen die Führungselemente (14) in Form von seitlich angeordneten, entsprechend profilierten Führungsrollen (51) im vertikal und horizontal formschlüssigen Eingriff stehen.

5. Führungsvorrichtung nach Anspruch 4, dadurch gekennzeichnet, daß der Führungskanal (21) vom einen Maschinenteil (1) und daran angeordneten, seitlichen Abdeckblechen (46) gebildet wird, die zwischen sich den Schlitz (47) freilassen.

6. Führungsvorrichtung nach Anspruch 1 oder einem der folgenden, dadurch gekennzeichnet, daß der Führungskanal (21) außenseitig beiderseits des Schlitzes (47) längsverlaufende Anlageschultern (28) für den Zahnriemen (4) aufweist.

7. Führungsvorrichtung nach Asnpruch 1 oder 6, dadurch gekennzeichnet, daß die Anlagefläche (27) auf dem Führungskanal (21) für den Zahnriemen (4) durch verzahnte Leisten oder Riemen (29) gebildet ist, deren Verzahnung in diejenige des Zahnriemens (4) paßt.

8. Führungsvorrichtung nach Anspruch 1, 6 oder 7, dadurch gekennzeichnet, daß der Zahnriemen (4) aus einem breiten Trägergurt (66) und einer schmalen Zahnleiste (67) besteht, wobei die Zahnleiste (67) in den Schlitz (46) greift und der Trägergurt (67) außenseitig auf den Rändern des Führungskanals (21) aufliegt.

9. Führungsvorrichtung nach Anspruch 1 oder einem der folgenden, gekennzeichnet durch deren mehrfache Anordnung bei einem zwei - oder dreidimensionale Bewegungen erzeugenden Manipulator.

**Claims**

1. Guiding apparatus for two machine parts (1, 2) supported and driven relative to one another in a longitudinally movable manner, the guiding apparatus being provided with a protection device, characterized in that a guide path (9, 45) is located on the one machine part (1) in a guide channel (21) which is completely closed except for a longitudinal slot (47), the guide members (14) of the other machine part (2), projecting through the slot (47) and the slot (47) in the region which is not covered by the other machine part (2) is covered by a toothed belt (4), which is guided in the other machine part (2) between two tension rollers (12) in a loop over a guide roller (11) constructed as a driving pinion, which is located with clearance above the tension rollers (12) and the guide path (9, 45).

2. Guiding apparatus according to Claim 1, characterized in that at least two pairs of circulating ball-bearings (16, 17) arranged one behind the other are provided as guide members (14), which pairs are arranged on the other machine part (2) in the region below the belt loop.

3. Guiding apparatus according to Claim 2, characterized in that the circulating ball-bearings (16 or 17) belonging to one pair are supported on a shoulder (20) of the other machine part (2) located between them and that the guide channel (21) of the one machine part (1) is formed by two guide bars (22, 23), the spacing of which is adjustable.

4. Guiding apparatus according to Claim 1, characterized in that the guide path (45) is constructed as a flat, horizontal tongue (65) with lateral running surfaces (64) bevelled frustoconically, with which the guide members (14 ) in the form of laterally located, correspondingly profiled guide rollers (51) are in vertical and horizontal form-locking engagement.

5. Guiding apparatus according to Claim 4, characterized in that the guide channel (21) is formed by the, one machine part (1) and lateral cover plates (46) located thereon, which leave the slot (47) free therebetween.

6. Guiding apparatus according to Claim 1 or one of the following, characterised in that on the outside, on both sides of the slot (47), the guide channel (21) comprises longitudinally extending contact shoulders (28) for the toothed belt (4).

7. Guiding apparatus according to Claim 1 or 6, characterised in that the contact surface (27) on the guide channel (21) for the toothed belt (4) is formed by toothed bars or belts (29), the toothing of which fits in that of the toothed belt (4).

8. Guiding apparatus according to Claim 1, 6 or 7, characterised in that the toothed belt (4) consists of a wide carrier belt (66) and a narrow toothed bar (67), the toothed bar (67) engaging in the slot (46) and the carrier belt (67) resting externally on the edges of the guide channel (21).

9. Guiding apparatus according to Claim 1 or one of the following, characterised by its multiple arrangement in a manipulator producing two- or three-dimensional movements.

**Revendications**

1. Dispositif de guidage de deux pièces de machine (1, 2) entraînées et montées mobiles longitudinalement l'une contre l'autre, le dispositif de guidage étant muni d'un dispositif de protection, caractérisé en ce qu'une surface de guidage (9, 45) de l'une des pièces de machine (1) est disposée dans un canal de guidage (21) entièrement fermé à l'exception d'une fente longitudinale (47), les éléments de guidage (14) de l'autre pièce de machine (2) passant dans la fente (47) et celle-ci (47) étant recouverte, dans une partie qui n'est pas recouverte par l'autre pièce de machine (2), d'une courroie dentée (4) passant, dans l'autre pièce de machine (2), entre deux galets tendeurs (12) en une boucle sur un galet de renvoi (11), constitué en pignon d'entraînement (11) et disposé à distance au-dessus des galets tendeurs (12) et de la surface de guidage (9, 45).

2. Dispositif de guidage suivant la revendication 1, caractérisé en ce au'il est prévu, comme élément de guidage (14), au moins deux couples de palier à circulation de billes (16, 17), qui sont disposés l'un derrière l'autre et dans la partie de l'autre pièce de machine (2) qui se trouve sous la boucle de la courroie.

3. Dispositif de guidage suivant la revendication 2, caractérisé en ce que les paliers à circulation de billes (16 et 17), appartenant à un couple, s'appuient sur un épaulement (20) de l'autre pièce de machine (2) qui se trouve entre eux, et en ce que le canal de guidage (21) de l'une des pièces de machine (1) est formé de deux réglettes de guidage (22, 23) dont l'écartement est réglable.

4. Dispositif de guidage suivant la revendication 1, caractérisé en ce que la surface de guidage (45) est constituée sous la forme d'une lame (65) horizontale et plate, à portée (64) latérale, biseautée en forme de tronc de cône, et par laquelle les éléments de guidage (14), sous forme de galets de guidage (51), disposés latéralement et profilés de manière adéquate, viennent en prise par complémentarité de formes suivant la verticale et suivant l'horizontale.

5. Dispositif de guidage suivant la revendication 4, caractérisé en ce que le canal de guidage (21) est formé d'une pièce de machine (1) et de tôles de recouvrement (46) latérales, qui y sont montées et qui laissent libre, entre elles, la fente (47).

6. Dispositif de guidage suivant la revendication ou l'une des suivantes, caractérisé en ce que le canal de guidade (21) comporte, du côté extérieur, de part et d'autre de la fente (47), des épaulements (28) longitudinaux de contact avec la courroie dentée (4).

7. Dispositif de guidage suivant la revendication 1 ou 6, caractérisé en ce que la surface (27) du canal de guidage (21), sur laquelle s'appuie la courroie dentée (4) est formée de réglettes ou de courroies (29) dentées, dont la denture s'adapte à celle de la courroie dentée (4).

8. Dispositif de guidage suivant la revendication 1, 6 ou 7, caractérisé en ce que la courroie dentée (4) est constituée d'une sangle-support (66) large, et d'une réglette dentée (67) étroite, la réglette dentée (67) pénétrant dans la fente (46) et la sangle-support (67) reposant du côté extérieur sur les bords du canal de guidage (21).

9. Dispositif de guidage suivant la revendication 1 ou l'une des suivantes, caractérisé en ce qu'il est prévu plusieurs fois, dans un manipulateur produisant des mouvenents dans deux dimensions ou dans trois dimensions.

FIG. 1

0 170 802

FIG. 2

FIG. 3

FIG. 4

FIG. 5

FIG. 6

FIG. 7

FIG. 8

FIG. 9